Europäisches Patentamt

(19) European Patent Office

Office européen des brevets

(11) Numéro de publication: **0 060 958**

**A1**

## (12) DEMANDE DE BREVET EUROPEEN

(21) Numéro de dépôt: **81440014.9**

(22) Date de dépôt: **25.03.81**

(51) Int. Cl.³: **B 23 Q 21/02**
**B 23 G 3/04**

(43) Date de publication de la demande:
**29.09.82** Bulletin **82/39**

(84) Etats contractants désignés:
**BE CH DE GB IT LI NL SE**

(71) Demandeur: **Villien, Bernard**
**52, rue Sous La Chaux**
**F-25600 Sochaux(FR)**

(72) Inventeur: **Villien, Bernard**
**52, rue Sous La Chaux**
**F-25600 Sochaux(FR)**

(74) Mandataire: **Metz, Paul**
**Cabinet METZ PATNI 95, rue de la Ganzau**
**F-67100 Strasbourg(FR)**

(54) **Porte-outil rétractable automatiquement pour filetage rapide sur tour parallèle.**

㊸ Porte-outil remarquable par une broche (3) montée coulissante en rappel élastique dans un corps (1) vers une position rentrée, broche (3) maintenue en position sortie et libérée en retrait par une gâchette (19) sollicitée en basculement de verrouillage ou de déverrouillage par le doigt (17) d'un dispositif de commande automatique de fin de passe, le réarmement s'effectuant par poussée manuelle ou automatique sur l'extrémité de la broche (3).

FIG.1

EP 0 060 958 A1

- 1 -

0060958

Porte-outil rétractable automatiquement pour filetage rapide sur tour parallèle.

L'invention est relative à un ensemble porte-outil rétractable automatiquement en fin de passes pour l'exécution de travaux de filetage sur tour parallèle à des vitesses de coupe élevées.

Dans la pratique, un filetage est exécuté en plusieurs passes successives, le recul de l'outil se faisant encore manuellement en fin de passe.

Un ouvrier si habile soit-il ne peut réaliser ce recul plusieurs fois au même endroit sans risquer de briser l'outil. De ce fait, on ne peut exécuter des filetages aux vitesses de coupe compatibles avec les possibilités offertes par les outils modernes.

Le porte-outil selon l'invention permet d'éviter ces inconvénients et met l'exécution du filetage sur tour parallèle à la portée d'ouvriers non qualifiés. Il permet aussi d'augmenter les cadences de production et même la qualité de l'exécution.

A cet effet, le porte-outil rétractable selon l'invention comprend une broche mise en contrainte élastique de retrait et montée mobile entre une position de travail où elle est sortie et une position rentrée actionnée par un dispositif de verrouillage et de déverrouillage à gachette sous l'effet d'un mécanisme mis en mouvement par un moyen de commande.

Selon une réalisation de l'invention, le moyen de commande est un dispositif électro-magnétique qui déplace un doigt ou tiroir libérant le verrou de la broche; celle-ci sous l'action du ressort recule instantanément. La remise en position de travail est manuelle.

Selon une autre réalisation de l'invention, le moyen de commande est un dispositif pneumatique ou hydraulique qui déplace un doigt ou tiroir libérant le verrou de la broche, celle-ci sous l'action du ressort recule instantanément. Le réarmement c'est à dire la remise en position de travail est, dans ce cas, effectuée par un dispositif pneumatique ou hydraulique conférant à

l'ensemble un automatisme complet.

D'autres caractéristiques techniques et avantages sont consignés dans la description qui suit effectuée à titre d'exemple non limitatif sur un mode d'exécution de l'invention en référence aux dessins accompagnants dans lesquels :

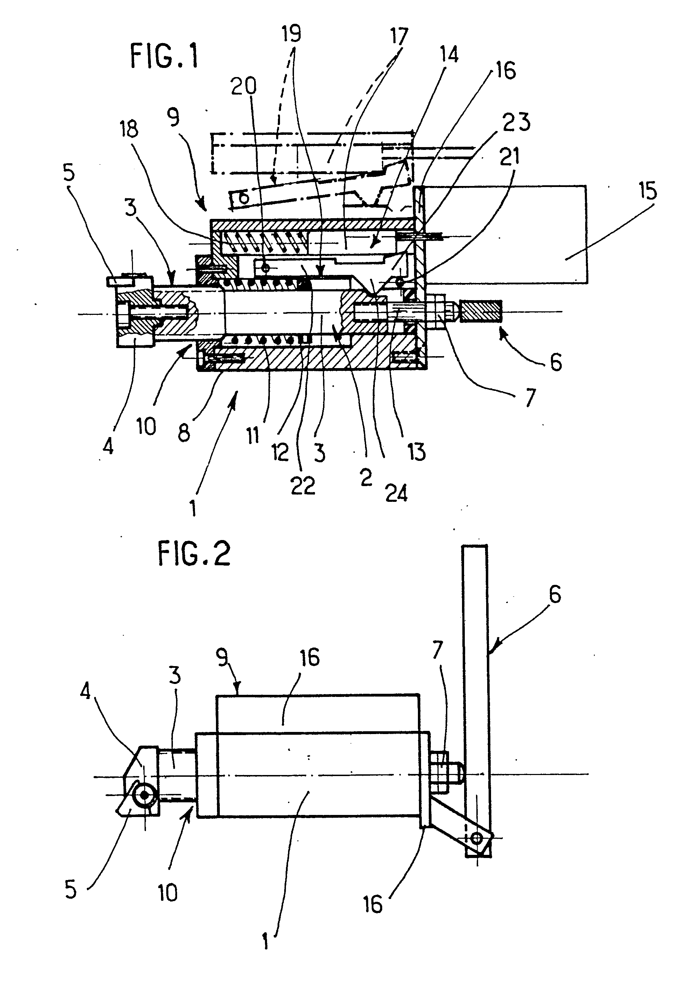

. la figure 1 est une représentation en coupe longitudinale du porte-outil escamotable automatiquement selon l'invention dans sa version de base avec représentation en traits pointillés de la gâchette à l'état basculé.

. la figure 2 est une vue schématique d'ensemble en plan illustrant plus particulièrement son bras articulé et sa commande de réarmement par poussoir.

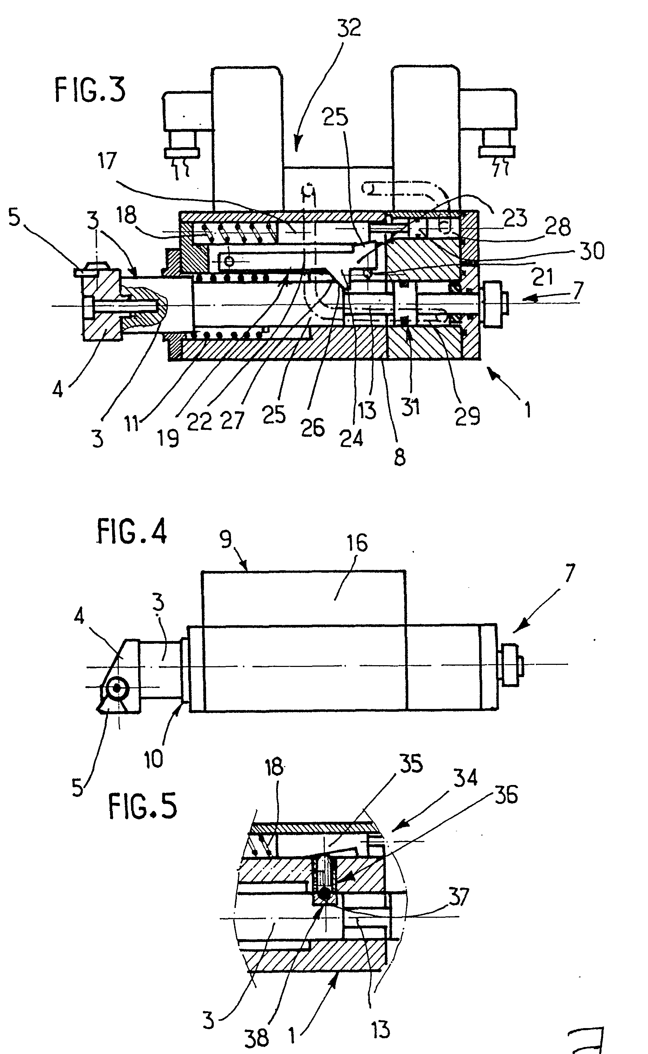

. la figure 3 est une vue en coupe longitudinale du porte-outil selon l'invention dans sa version à commande pneumatique.

. la figure 4 est une vue en plan de la figure 3.

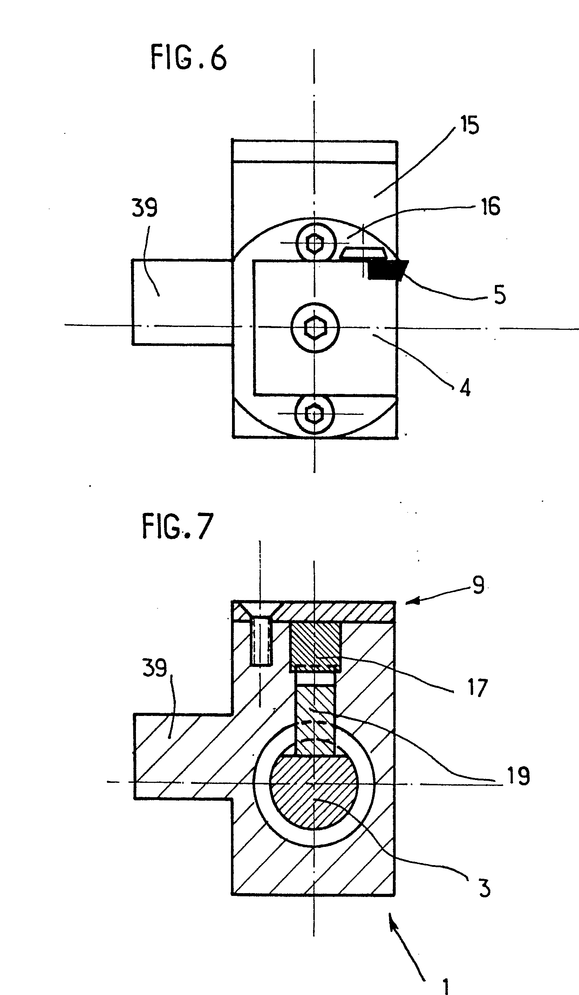

. la figure 5 est une vue de détail en coupe illustrant un mécanisme de verrouillage à bille.

. la figure 6 est une vue en élévation de l'ensemble côté face avant.

. la figure 7 est une vue en coupe transversale illustrant la fixation dans la tourelle.

En référence aux figures 1 et 2, le porte-outil rétractable selon l'invention comporte un corps 1 métallique de forme générale allongée abritant le mécanisme 2 de dégagement et de mise en place par l'intermédiaire d'une broche mobile 3 en forme de tige dont la tête 4 porte l'outil 5, par exemple du type plaquette à fileter ou tout autre.

Le corps 1 du porte-outil est monté sur la tourelle du tour.

Un levier 6 articulé sur un support solidaire du corps 1 actionne en fin de course un poussoir 7 par l'intermédiaire duquel s'effectue le réarmement manuel.

Comme on le verra ci-après, le réarmement automatique sera réalisé par un verin auxiliaire pneumatique ou hydraulique.

Le corps 1 se compose d'une coquille 8 recouverte par un carter 9.

0060958

La coquille 8 présente en extrémité un orifice 10 par lequel passe la tige mobile 3. Celle-ci est montée en rappel élastique de retrait vers l'intérieur au moyen d'un ressort 11 coaxial à la tige. Ce ressort est bandé sur celle-ci par contact d'une de ses extrémités avec la paroi transversale de la coquille et par son autre extrémité avec une bague d'arrêt 12.

La tige présente à son extrémité opposée au porte-outil une prolongation 13 de plus faible section précédée d'une transition conique communiquant avec le poussoir 7.

Le carter 9 renferme un dispositif de verrouillage et de déverrouillage 14 actionné par un moyen de commande, par exemple un électroaimant 15 fixé à une platine 16 alimenté par un microcontact (non représenté) placé à un endroit approprié sur le banc du tour pour la commande de fonctionnement dudit électroaimant en fin et début de course de chaque passe lors des mouvements de retrait et de mise au travail de l'outil.

L'électroaimant met en mouvement un doigt de commande 17 monté en rappel élastique par l'intermédiaire d'un ressort de compression 18, doigt 17 du type coulisseau.

Le mécanisme d'actionnement du dispositif de verrouillage et de déverrouillage 14 se compose d'une pièce principale 19 montée pivotante autour d'un axe 20 dont l'extrémité repose sur un axe butée 21. Cette pièce transmet le mouvement de commande de l'électroaimant 15 à la tige mobile 3 pour blocage ou déblocage, jouant ainsi le rôle de gâchette.

Cette gâchette se présente sous la forme d'un élément rectiligne 22 dont une des extrémités est montée pivotante autour de l'axe 20 et dont l'autre extrémité comporte des ergots transversaux supérieur 23 et inférieur 24. Les rampes 25 et 26 des ces ergots sont amenées en contact de poussée avec l'extrémité du doigt de commande 17 de l'électroaimant et la rampe 27 de la transition conique de la tige mobile 3.

Une variante intéressante de l'invention consiste à remplacer la commande par électroaimant par un premier verin pneumatique ou hydraulique 28 appelé verin de commande

- 4 -

0060958

et à remplacer le levier de réarmement 6 par un deuxième vérin 29 appelé vérin de réarmement par l'intermédiaire de pistons 30 et 31 mis en mouvement par la pression d'un fluide moteur. Ces vérins seront alimentés par un distributeur 32 de fluide sous pression à cinq voies comprimé par des compresseurs auxiliaires tels que 33.

On peut envisager un dispositif de verrouillage et de déverrouillage 34 à bille tel que représenté en figure 5.

Dans ce cas, le coulisseau 17 affecte la forme d'un crochet 35 dont la rampe inférieure commande le déplacement haut et bas d'un élément mobile 36 pourvu à l'une ou à ses deux extrémités d'une bille telle que 37 en vue du blocage en position sortie ou de la libération de la tige mobile 3. La bille d'extrémité travaille en appui sur une empreinte cylindro-conique 38 formée à l'extrémité de la tige 3.

Le corps 1 du porte-outil selon l'invention est fixé à la tourelle ou au bloc porte-outil du tour parallèle par l'intermédiaire de sa saillie latérale 39.

On décrira ci-après les différentes phases de fonctionnement du porte-outil rétractable selon l'invention.

La broche coulissante 3 est maintenue durant le travail sous la tension du ressort 11 en appui fixe sur la face interne du corps 1 et sur la. bague d'arrêt 12 solidaire de ladite broche.

Elle ne peut pas reculer tant que la gâchette 19 est maintenue pivotée vers le bas par le coulisseau 17 en appui par son ergot inférieur 24 sur la rampe conique d'extrémité 26.

Arrivé en fin de course de filetage, le chariot du tour rencontre un micro contact fixé sur le banc du tour à l'endroit adéquat, ce micro contact envoie une impulsion à l'électro-aimant 15 lequel pousse le coulisseau 17, comprimant le ressort 18, la gâchette 19 ainsi libérée va se soulever poussée par la broche 3 sous l'action du ressort 11 en tension sur la bague 12.

Le recul de la broche est instantané.

Avant de prendre une nouvelle passe, le réarmement s'opère manuellement par le levier 6 agissant sur le poussoir 7 remettant la broche 3 en place.

La gâchette 19 retombe sur l'axe de butée 21, le coulisseau 17 sous la tension du ressort 18 reprend sa place, le tout est immobilisé positivement pour une nouvelle passe.

Dans le cas d'une commande par vérin pneumatique ou hydraulique, le fonctionnement reste identique.

L'électro-aimant 15 est remplacé par le vérin 28 et le levier 6 de réarmement manuel par le vérin 29 jouant les mêmes rôles.

Le banc du tour est équipé de deux micro-contacts (non représentés) de part et d'autre du chariot qui sollicitent dans un sens et dans l'autre les électro-aimants du distributeur 32 à cinq voies, lequel envoie selon le stade de fonctionnement le fluide comprimé dans l'un ou l'autre vérin 28 ou 29.

L'invention a été décrite en détail ci-dessus, il est bien entendu qu'elle ne saurait s'y limiter et que diverses modifications d'ordre secondaire, de substitutions par des équivalents ou variantes directes entrent au contraire pleinement dans son cadre.

Ainsi, diverses modification, adaptations ou aménagements pourront être prévus tel, par exemple, une manchette protectrice sur la partie extérieure de la tige...

- 6 -

0060958

## REVENDICATIONS

1. Porte-outil rétractable automatiquement en fin de passe pour l'exécution rapide de filetages sur tour parallèle monté par son corps (1) sur la tourelle du tour caractérisé en ce qu'il comprend en association une broche (3) montée coulissante en poussée et en retrait, et en contrainte élastique vers une position rentrée, ladite broche étant maintenue en position sortie et libérée pour son retrait par un dispositif de verrouillage et de déverrouillage (14) sollicité par les mouvements de translation de l'élément mobile (17) d'un dispositif de commande piloté par un microcontact de fin de course, le réarmement s'effectuant par poussée sur la prolongation de la tige par un moyen mécanique ou automatique.

2. Porte-outil selon la revendication 1 caractérisé en ce que la broche (3) est une tige et en ce que son extrémité extérieure au corps présente une tête (4) pourvue de moyens appropriés pour porter l'outil (5).

3. Porte-outil selon la revendication 1 caractérisé en ce que la contrainte élastique résulte d'un ressort (11) monté sur la tige (3) et immobilisé entre la paroi du corps du porte-outil et une bague d'arrêt (12).

4. Porte-outil selon les revendications 1 et 2 caractérisé en ce que l'extrémité de la broche (3) présente une réduction conique formant rampe d'immobilisation (27) poursuivie par une prolongation cylindrique (13) terminée par une tête formant poussoir de réarmement (7).

5. Porte-outil selon la revendication 1 caractérisé en ce que le dispositif de vérrouillage et de dévérrouillage est une gâchette formée d'une pièce principale (19) à partie rectiligne (22) dont une des extrémités est montée pivotante autour d'un axe (20) et dont l'autre extrémité comporte des ergots transversaux supérieur (23) et inférieur (24) dont les rampes (24) et (26) coopèrent en contact de poussée avec la partie conique de la tige (3) et l'élément mobile du dispositif de commande en vue du vérrouillage ou de la libération de la tige (3).

6. Porte-outil selon les revendications 1 et 5 caractérisé en ce que l'élément mobile (17) du dispositif de commande est un coulisseau mis en mouvement de translation par l'intermédiaire d'un électro-aimant (15) ou d'un vérin de commande (28) qui coopère avec la pièce principale pivotante (19) du dispositif de verrouillage et de déverrouillage.

7. Porte-outil selon la revendication 1 caractérisé en ce que le moyen de réarmement est un levier (6) dont le bras articulé sur le corps (1) et actionné manuellement appuie sur le poussoir (7).

8. Porte-outil selon la revendication 1 caractérisé en ce que le réarmement s'effectue par l'intermédiaire d'un vérin (29).

9. Porte-outil selon la revendication 1 caractérisé en ce que le dispositif de verrouillage et de déverrouillage (14) est un élément de verrouillage ou de déverrouillage (36) à bille coopérant avec une empreinte cylindroconique (38) prévue à l'extrémité de la tige (3).

10. Porte-outil selon les revendications 1 et 9 caractérisé en ce que l'élément mobile du dispositif de commande est un coulisseau conformé en crochet (35) dont la rampe inférieure permet le déplacement transversal de l'élément de verrouillage ou de déverrouillage à bille (36).

FIG.1

FIG.2

0060958

2/3

0060958

FIG.3

FIG.4

FIG.5

0060958

FIG.6

39    15
      16
      5
      4

FIG.7

      9
39
      17
      19
      3
      1

Office européen
des brevets

**RAPPORT DE RECHERCHE EUROPEENNE**

**0060958**
Numéro de la demande

EP 81 44 0014

| Catégorie | Citation du document avec indication, en cas de besoin, des parties pertinentes | Revendication concernée |
|---|---|---|
| | FR - A - 1 194 148 (CASTEGNARO) <br> * résumé 1 * <br> --- | 1-3,7 |
| | US - A - 2 482 786 (MACK) <br> * revendication 1 * <br> --- | 1-3,7 |
| | DE - A - 2 007 356 (BISCHOFF) <br> * revendication 6 * <br> --- | 6 |
| | GB - A - 838 630 (HOLTSPUR) <br> * revendication 1 * <br> --- | 1,2,4, 8 |
| | FR - A - 2 056 945 (HOFMANN) <br> * revendication 1 * <br> --- | 9 |
| A | US - A - 2 852 966 (OLSON) | |
| A | GB - A - 162 538 (GUILLAUME) | |

**DOCUMENTS CONSIDERES COMME PERTINENTS**

**CLASSEMENT DE LA DEMANDE (Int. Cl.³)**

B 23 Q 21/02
B 23 G   3/04

**DOMAINES TECHNIQUES RECHERCHES (Int. Cl.³)**

B 23 Q
B 23 G

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons

&: membre de la même famille,
document correspondant

Le présent rapport de recherche a été établi pour toutes les revendications

| Lieu de la recherche | Date d'achèvement de la recherche | Examinateur |
|---|---|---|
| La Haye | 02.12.1981 | DE GUSSEM |

OEB Form 1503.1   06.78